# EUROPEAN PATENT SPECIFICATION

(11) **EP 0 895 615 B1**
(45) Date of publication and mention of the grant of the patent: **17.10.2001**
(21) Application number: 97919519.5
(22) Date of filing: 22.04.1997
(51) Int. Cl.: G05B 19/416

(54) **METHODS AND APPARATUS FOR GRINDING CONCENTRIC CYLINDRICAL WORKPIECE REGIONS**
VERFAHREN UND VORRICHTUNG ZUM SCHLEIFEN VON KONZENTRISCH ZYLINDRISCHEN BEREICHEN VON WERKSTÜCKEN
PROCEDES ET DISPOSITIF POUR MEULER DES ZONES CYLINDRIQUES CONCENTRIQUES SUR DES PIECES A TRAVAILLER

(30) Priority: 23.04.1996 GB 9608352
(43) Date of publication of application: 10.02.1999
(60) Divisional application: 99119668.4
(73) Proprietor: Unova U.K. Limited, Aylesbury, Buckinghamshire HP20 2RQ (GB)
(72) Inventor: CLEWES, Stuart, West Yorkshire BD22 7QX (GB); PICKLES, John, David, Skipton,North Yorkshire BD23 5PN (GB)
(74) Representative: Nash, Keith Wilfrid
(86) International application number: GB9701110
(87) International publication number: WO9740434

(56) References cited:
- EP-A- 0 276 802
- EP-A- 0 282 776
- DE-A- 2 918 249
- US-A- 5 419 222
- PATENT ABSTRACTS OF JAPAN vol. 013, no. 406 (P-930), 8 September 1989 & JP 01 147608 A (TOSHIBA MACH CO LTD), 9 June 1989,

## Description

### Field of invention

This invention concerns the grinding of cylindrical sections of workpieces which should be concentric in rotation, such as the journal bearing regions of a crankshaft.

### Background to the invention

During cylindrical grinding, a workpiece is rotated about its primary axis and the or each cylindrical section of the crankshaft is ground in a conventional way by moving a grinding wheel into a grinding position so as to remove material from the workpiece and produce a cylindrical region thereon.

. During the grinding operation, unwanted eccentricity may be introduced into such a cylindrical region due to distortion introduced during the grinding step, so-called runout, and as a consequence of stress relieving the workpiece. Any eccentricity introduced into such journal bearing regions of a crankshaft introduces undesirable wear in the component in use, such as when it rotates in an engine.

In EP-A1-0282776 there is disclosed a honing process in which honing stones on an arbor are pressed outwardly against an internal surface of a workpiece. While the stones are still lightly pressing against the surface, after preliminary honing, a measurement procedure is carried out which is processed by a computer, and the latter then causes the normal reciprocating honing stroke to be altered.

Such a known process is not suitable for compensating for unwanted eccentricity introduced in an externally ground cylindrical region. Moreover, the speed at which a honing stone operates against a workpiece is of a whole order of magnitude lower than that of a present-day external grinding machine.

It is therefore an object of the present invention to provide a method of setting up a grinding machine, and grinding methods and machines for reducing unwanted eccentricity in supposedly concentric cylindrical regions of ground workpieces.

### Summary of the invention

The present invention is defined by claims 1 and 11.

According to the present invention a method of setting up a computer controlled grinding machine having a grinding wheel for concentrically grinding an external cylindrical region of a workpiece, comprises the steps of loading a programme containing data about the workpiece, loading a programme containing wheelfeed instructions, running the wheelfeed programme instructions so as to grind the workpiece region, disengaging the grinding wheel, measuring any unwanted eccentricity introduced into the region by the grinding process together with the angular position thereof, and adjusting the wheelfeed programme instructions or control signals to form corrected wheelfeed programme instructions or control signals, so that during subsequent grinding of the said region, or of similar regions of similar workpieces, the wheelfeed is controlled to produce a complementary eccentricity so as to compensate for the measured unwanted eccentricity.

Preferably the measuring of the workpiece region occurs after it has been stress relieved, which may be achieved merely by disengaging the grinding wheel, but may involve removing the workpiece from the grinding machine.

### Application to elongate workpieces

Where a plurality of such regions are to be ground at spaced apart positions axially along an elongate workpiece which is supported at opposite ends, the setting up process measurements may be performed on a concentric cylindrical region approximately midway along the said axial length of the workpiece, and proportionately reduced corrections are applied to the wheelfeed programme instructions or control signals for similar regions to be ground which are displaced from the mid position towards the supported ends of the workpiece.

Alternatively and preferably in a method of setting up a computer controlled grinding machine to machine workpieces in which unwanted eccentricity introduced by the grinding process forces can vary in extent along the axial length thereof (as measured with reference to its supported ends), such that regions towards the centre of the workpiece require a greater degree of eccentricity compensation during grinding as opposed to those adjacent the ends thereof, the method involves the steps of cylindrically grinding all of the cylindrical surfaces of a workpiece which are to be concentric with the primary workpiece axis without introducing any compensation for unwanted eccentricity introduced by the grinding process forces, thereafter making measurements on the workpiece to determine any unwanted eccentricity and the angular position thereof about the primary workpiece axis of rotation for each of the ground regions, and separately adjusting each of the wheelfeed programme instructions or control signals to be used to control the wheelfeed during the subsequent grinding of the or another such workpiece, at each of the corresponding said regions thereof, so as to compensate individually for any process-induced eccentricity in each said region.

### Checking on the corrections

After a setting up process has been performed and the original workpiece has been reground using the corrected wheelfeed programme instructions or control signals, a further check on the reground workpiece may be made, and second order corrections may be made to the wheelfeed programme instructions or control signals, before grinding further workpieces.

Measurements may be made subsequent to each further workpiece grinding to determine whether the corrections made from earlier measurements sufficiently compensate for any unwanted process induced eccentricity, and further corrections may be made to the wheelfeed programme instructions or control signals as required. The process may be repeated until the measurements made on a test workpiece indicate that the unwanted eccentricity of each ground region is within desired limits. Thereafter the grinding machine wheelfeed may be controlled to grind further workpieces in accordance with the finally modified set of wheelfeed programme instructions or control signals.

### Multiple workpiece measuring for setting up

Instead of producing only one workpiece on which measurements are made during setting up, it may be preferable at each stage to grind a number of workpieces which together form a sample, and to perform eccentricity measurements on the workpieces in each sample, and thereby determine the extent of any unwanted eccentricity both in terms of angular position and radial extent for each region of each workpiece in each sample, and to determine the mean unwanted eccentricity and mean angular position of such eccentricity for each sample, for use as the basis for the correction to the wheelfeed programme instructions or control signals.

The invention also lies in a method of grinding concentric cylindrical regions of similar workpieces comprising the steps of setting up modified wheelfeed programme instructions or control signals in any of the aforesaid ways, and thereafter grinding cylindrical surfaces of workpieces similar to that used in the setting up process, using the modified wheelfeed programme instructions or control signals derived from the setting up procedure to control the wheelfeed drive during each grinding.

The invention thus allows the known software controlled crankpin following facility incorporated into computer controlled grinding machines to permit a grinding wheel to follow the relatively large eccentric movement of a crankpin during grinding as the crankshaft rotates, to be utilised, albeit acting at a smaller scale, to compensate for said unwanted eccentricity introduced into cylindrically ground surfaces of a workpiece which should be concentric as a consequence of grinding process forces exerted as such surfaces are ground, which unwanted eccentricity tends to appear after the workpiece is stress relieved.

The invention thus in effect provides for eccentrically grinding regions of workpieces which are to have concentric cylindrical surfaces relative to the workpiece primary axis rather than concentrically grinding such regions, the degree of eccentricity being such that when a ground workpiece is stress relieved after grinding, the regions in fact will be concentric relative to the primary axis of the workpiece.

The invention is of particular application to the grinding of journal bearing regions on crankshafts, but it is to be understood that the invention is equally applicable to the grinding of any cylindrical concentric workpiece section so as to remove eccentricity which the grinding process can introduce into the workpiece, and which becomes evident as the latter becomes unstressed.

### Apparatus embodying the invention

According to another aspect of the invention there is provided a computer controlled grinding machine for performing methods of grinding as aforesaid comprises a grinding wheel, drive means for rotating the wheel, wheelfeed drive means for advancing and withdrawing the wheel towards and away from an external cylindrical region of a workpiece in a precise manner, computer means for controlling the wheelfeed drive means, which computer means includes first memory means for storing programmable wheelfeed instructions whereby the position of the wheel at each instant during a grinding process can be controlled, programme means loaded into the computer means to control the advance and withdrawal and position of the wheel, gauge means connected to the computer means for measuring said unwanted eccentricity and the angular position thereof while the wheel is disengaged, and second memory means for storing correction signals derived from the gauge means for adjusting the original wheelfeed instructions during the grinding of said regions, or storing said corrected wheelfeed programme instructions or control signals, so that a complementary eccentricity is produced in said region.

In this way the grinding process performed by the machine will reduce any unwanted eccentricity introduced by grinding process forces into what should be a concentric workpiece region, by grinding each such region so as to be complementarily eccentric to any eccentricity which would be introduced by the grinding process forces. By complementary is meant equal in magnitude but opposite in sense (direction).

Conveniently the wheelfeed drive includes two modes, a first mode for normal advance and withdrawal, and a second mode in which very small but very precise adjustments can be made to the instantaneous wheel position so that during grinding, with the grinding wheel in contact with the workpiece and surface grinding being performed, the grinding wheel can be urged backwards and forwards by very small amounts in synchronism and appropriate phase with the rotation of the workpiece, using corrected wheelfeed programme instructions or control signals as aforesaid, so as to compensate for any eccentricity which would otherwise arise in the grinding of the workpiece region due to forces arising during the grinding process.

The invention will now be described by way of example with reference to the accompanying drawings, in which:
Figure 1 illustrates a computer controlled grinding machine, fitted with an in process gauge;
Figure 2 is a side view of the gauge to an enlarged scale;
Figure 3 is a diagrammatic illustration of how a gauge is controlled and in turn controls the grinding cycle, via the machine controlling computer; and
Figures 4 is an example of the grinding process steps of one method according to the invention.

### Detailed description of the drawings

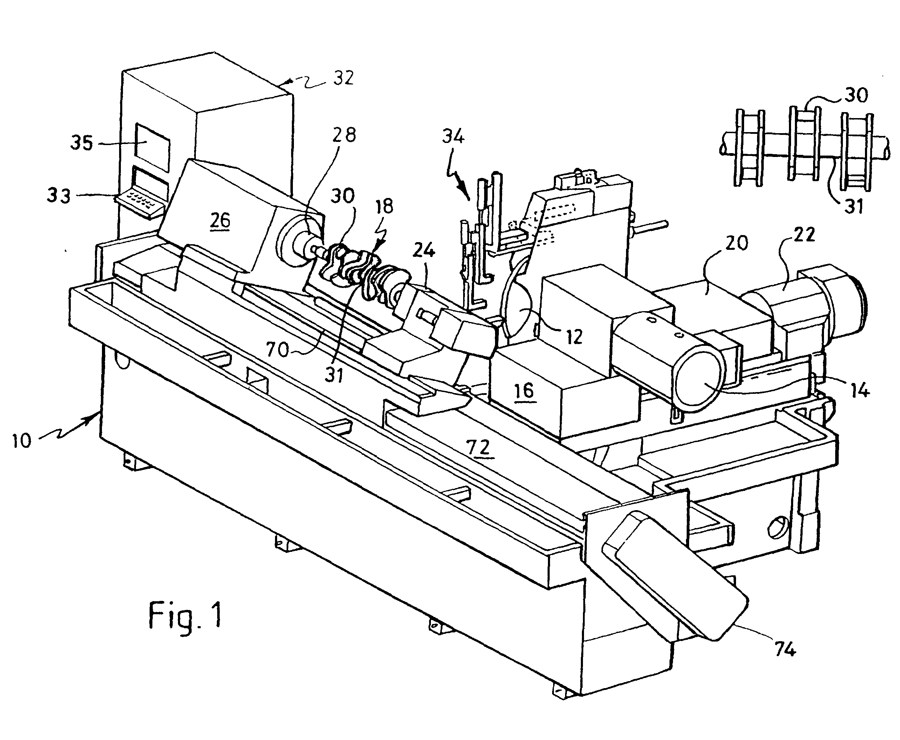

Figure 1 shows a grinding machine 10 having a grinding wheel 12 driven by a motor 14 and mounted on a wheelhead 16 for movement towards and away from a workpiece 18 along a linear track 20 under the control of the wheelfeed drive motor 22. The workpiece 18 is mounted on a carriage 70 itself slidable on a slideway 32 and driven thereby to position the workpiece relative to the wheel, via a drive 74. The workpiece is mounted between centres in a tailstock 24 and a headstock 26 (themselves mounted on the carriage 70). The headstock houses a motor (not shown) for rotating the workpiece 18 via a chuck 28. The workpiece shown is a crankshaft of an internal combustion engine and includes offset crankpins 30 (which are eccentric to the main crankshaft axis), and cylindrical bearing regions 31, which are to be ground to size, each bearing region constituting a cylindrical workpiece region for grinding which should be concentric with the workpiece axis.

A computer 32 loaded with workpiece data and operating programmes (such as are to be described) controls the operation of the machine and inter alia moves the wheelhead 16 towards and away from the workpiece 18 as the workpiece rotates, so as to maintain contact between the wheel and the journal bearing region being ground. Some data can be entered via the keyboard 33. Data/results/process steps can be displayed on the screen 35.

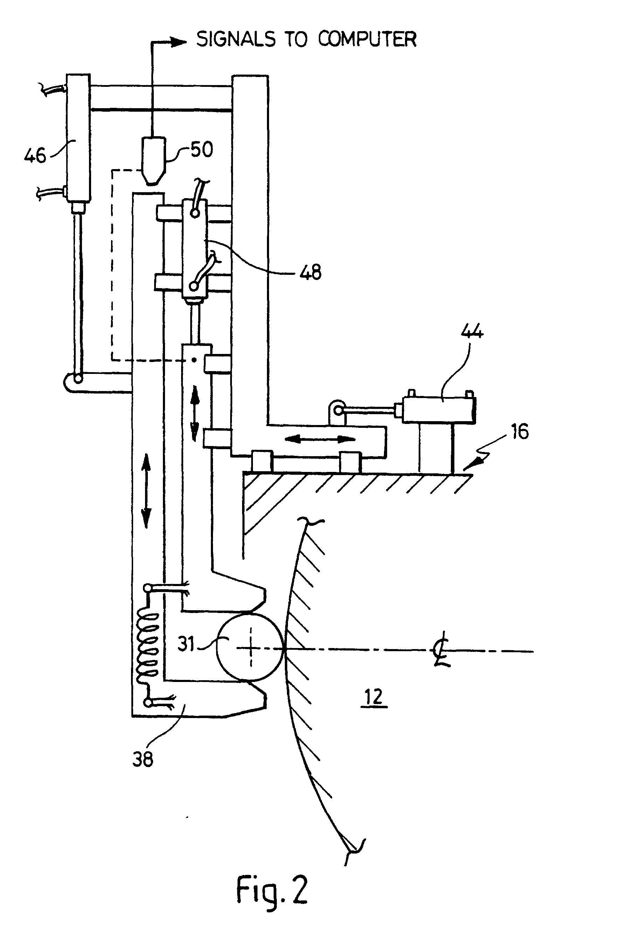

A gauge, generally designated 34, is carried by the wheel head assembly for gauging the diameter of the regions being ground. This can be done while the workpiece is rotated slowly, and preferably without the grinding wheel in contact, after grinding. The gauge is shown in its parked, non-operating position in Figure 1. During gauging it is advanced so that the fingers of the gauge (described in more detail with reference to Figure 2) are first located on the opposite side of the workpiece from the wheel 12, so that they can be lowered and moved back towards the wheel so as to be located above and below the workpiece, and then moved towards the latter until they touch it at diametrically opposite regions for gauging.

The gauge was designed to allow the gauging of crankpins as they are ground, and Figure 2 shows how the fingers 36 and 38 can engage a journal bearing region 31. The dotted outlines 40, 42 show the extreme positions of the pin relative to the wheel 12 as the pin is rotated around the axis of the crankshaft, and describes a vertical path as seen by the wheel 12. Pneumatic drives 44, 46 and 48 produce relative movement between the gauge assembly and the wheelhead 16, between the gauge assembly and the workpiece, and between the two fingers 36 and 38.

A sensor 50 determines the spacing between the fingers 36, 38 and provides a spacing signal for the computer 32, from which the diameter of the workpiece region between the fingers can be computed. The sensor can also provide a signal indicative of the linear oscillatory movement of the gauge finger 38 caused by any eccentricity in the ground region, by locking the two fingers 36, 38 so as to just lightly clamp the workpiece therebetween, and rotating the latter slowly and observing any movement of 38, relative to sensor 50.

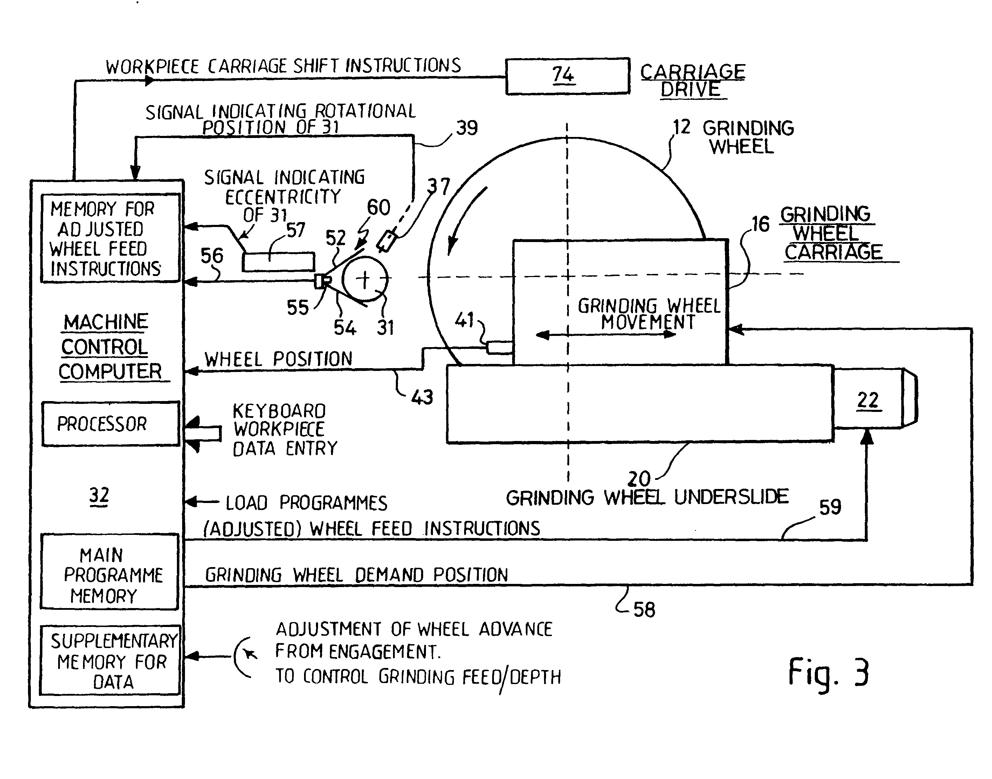

Figure 3 shows diagrammatically the grinding wheel 12, the wheelhead 16, the slide 20 and a different type of gauge from that shown in Figures 1 and 2. This engages a journal bearing workpiece region 31 by means of two fixed converging fingers 52, 54 with a sensor 55 for determining the distance between the converging fingers at which the fingers make contact with the workpiece. The computer 32 receives the gauging signals along line 56 and can compute therefrom the diameter of the workpiece region and delivers inter alia a position signal to the wheelhead drive via lines 58 + 59. Not shown are the signal paths from the computer 32 to the other drives for moving the gauge into and out of engagement and controlling the speed of rotation of the crankshaft. Although developed to measure crankpin diameters during grinding, this type of gauge can also be used to determine any eccentricity in the rotating workpiece region, by urging the gauge fingers 52, 54 into contact as shown and converting any in line movement of the gauge assembly 60, due to eccentricity, into an appropriate electrical signal using a transducer such as 57.

Wheel position signals from transducer encoder 41 are passed to the computer 32 via line 43.

As described in our copending UK Application 9702550.6 which describes a method of guiding crankpins to size using in process gauging, a technique is also described to obtain a high quality surface finish and highly accurate diameters of ground components. This technique may also be used when grinding journal bearing regions. Thus during grinding, an initial fast wheelfeed may be used to roundout- journal bearing region 31, and the fast grinding feed stopped after a fixed feed amount independent of the gauge. At the end of the fast feed the gauge 34 is used by the machine control computer to sample the size of the region 31 and to check any eccentricity in magnitude and angular position as determined by the rotated position of the workpiece at which the eccentricity is noted. A prerequisite for the grinding cycle to proceed beyond this point is that this sample of size sensibly confirms that the gauge is on the region and functioning properly.

After computing the necessary control signal to compensate for any measured eccentricity the grinding feed restarts. A lower feed rate may be used.

In normal operation the feed will be stopped in response to signals derived from the wheel position and/or the in-process gauge 34 in a diameter measuring mode, and sampled by the machine control computer 32.

In a method, which involves in process gauging as the grinding feed proceeds towards a target size, near final size the instantaneous size of the region 31 being ground can be continuously sampled by the machine control computer.

If one or two or more consecutive samples of region 31 size, are found to be at or below the target size, the controlling computer immediately stops the grinding feed and initiates a feed dwell. This dwell, measured as N workpiece turns, permits the region being ground to achieve good geometric roundness and a stable size. This procedure gives an optimum response to fast grinding feeds commensurate with fast manufacturing times. During this feed dwell, typically two work revolutions, the controlling computer stores a number of consecutive samples of size measured at different angular positions relative to the gauge fingers so that it can calculate an average value of the workpiece region diameter.

At the completion of this dwell, the average diameter value may be calculated, and this value used to calculate the feed distance to achieve the desired final size of the region. The controlling computer then initiates an incremental feed to final size. At the start of this incremental feed, the gauge, having completed its work, can be retracted, with the object of minimising manufacturing time. Because the feed to final size is not being controlled by gauge, it does not have to be slow but can be optimised to eliminate the build-up of machining vibrations and/or minimise machining time.

After a final "sparkout feed dwell", measured as n workpiece turns, the grinding wheel can be retracted, initially at a slow rate so as not to leave any grinding wheel breakaway mark, and then at a faster rate to minimise manufacturing time.

Alternatively, machining may be achieved without such in process gauging, simply by controlling the wheelfeed and gauging components off-line, and correcting for process induced eccentricity in accordance with the present invention and for wheel wear by appropriate adjustment as the grinding of a batch of workpieces progresses.

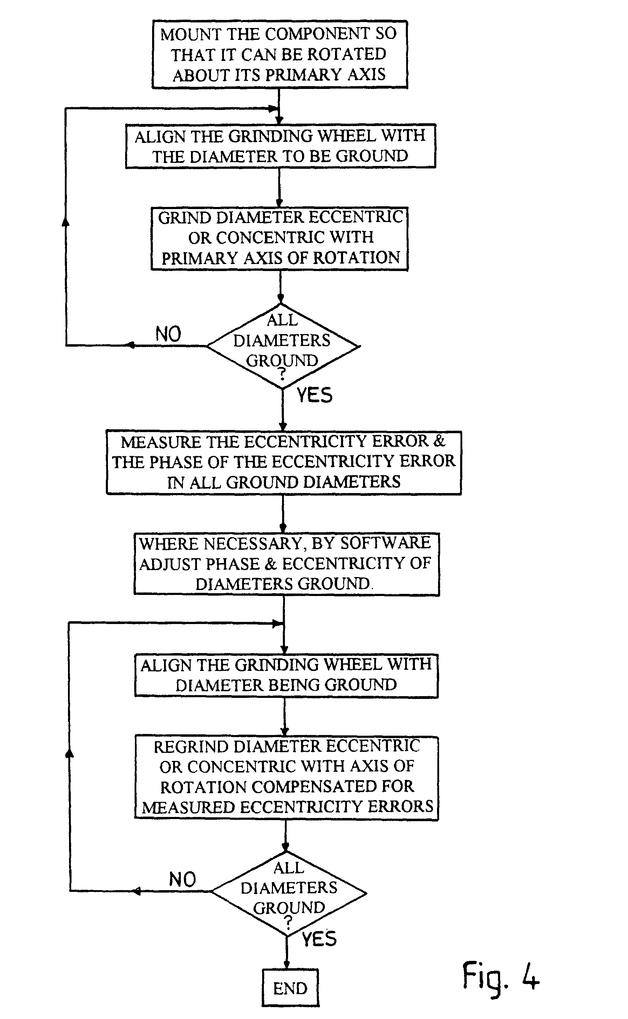

Figure 4 illustrates the steps of a method of grinding one component having a number of cylindrical surfaces which are to be ground concentric to the primary axis of the component. The same process is followed for each component to be ground.

Detailed programme steps required to set up and operate a grinding machine in different ways, in accordance with different aspects of the invention are now listed on the following pages.

The list of computer controlled operations which follow illustrate the steps which the machine controlling computer must initiate the inputs it must respond to and the decisions it must make, under the control of programmes loaded into its memory, so as to adjust the wheelfeed control signals and other machine parameters and parts so as to set up the machine to thereafter grind a journal bearing region of a crankshaft, in accordance with different methods embodying the invention, as detailed.

A brief explanation of the process to which the steps relate is provided at the head of each listing.

Set-up routine/programmes
1. Routine for setting up a computer controlled grinding machine for grinding a workpiece having one region to be concentrically ground, and for subsequent grinding of similar workpieces
   1. Load workpiece data into machine computer
   2. Load wheelfeed programme for workpiece region
   3. Enter target wheel advance for region
   4. Mount workpiece
   5. Rotate workpiece about primary axis for grinding
   6. Align grinding wheel with region to be ground
   7. Initiate wheelfeed and advance wheel to engage region
   7 Grind workpiece and measure wheelhead advance
   9. Stop wheelfeed when desired wheel advance achieved
   10. Disengage wheel and workpiece
   11. Apply gauge to ground region
   12. Rotate workpiece slowly
   13. Gauge ground diameter and store diameter measurements.
   14. Identify any eccentricity and its rotational position
   15. Adjust wheelfeed programme for eccentricity
   16. Enter new target wheel advance
   17. Grind workpiece using adjusted wheelfeed programme
   18. Measure wheelhead advance
   19. Stop wheelfeed when required advance achieved
   20. Retract wheel
   21. Stop workpiece rotation
   22. Demount workpiece
   23. More similar workpieces? - Yes or No
   24. If Yes, go to 25, if No, go to 27
   25. Mount new workpiece
   26. Go to 16
   27. END
2. Similar routine where workpiece is to be removed for gauging
   1. Load workpiece data into machine computer
   2. Load wheelfeed programme for workpiece region
   3. Enter target wheel advance for region
   4. Mount workpiece
   5. Rotate workpiece about primary axis for grinding
   6. Align grinding wheel with region to be ground
   7. Initiate wheelfeed and advance wheel to engage region
   8. Grind workpiece and measure wheelhead advance
   9. Stop wheelfeed when desired wheel advance achieved
   10. Disengage wheel and workpiece
   11. Stop workpiece rotation
   12. Demount workpiece and stress relieve off machine
   13. Gauge workpiece diameter and note any eccentricity
   14. Mark angular position of noted eccentricity
   15. Remount workpiece with mark at a particular position
   16. Enter eccentricity details into machine computer
   17. Adjust wheelfeed programme for eccentricity
   18. Rotate workpiece about primary axis
   19. Grind workpiece using adjusted wheelfeed programme
   20. Measure wheelhead advance
   21. Stop wheelfeed when final advance achieved
   22. Retract wheel
   23. Stop workpiece rotation
   24. Demount workpiece
   25. More similar workpieces? - Yes or No
   26. If Yes, go to 27. If No, go to 29
   27. Mount new workpiece
   28. Go to 17
   29. END
3. Set up routine for a computer controlled grinding machine for grinding a workpiece having two or more regions to be concentrically ground, and subsequent grinding of similar workpieces
   1. Load workpiece data into machine computer
   2. Load wheelfeed programme for workpiece regions
   3. Enter target wheel advances for regions
   4. Mount workpiece
   5. Select a region near centre of workpiece to grind
   6. Rotate workpiece about primary axis for grinding
   7. Align grinding wheel with region to be ground
   8. Initiate wheelfeed and advance wheel to engage region
   9. Grind workpiece and measure wheelhead advance
   10. Stop wheelfeed at desired wheel advance
   11. Disengage wheel and workpiece
   12. Engage diameter measuring gauge on ground region
   13. Rotate workpiece slowly
   14. Gauge ground diameter and store diameter measurements
   15. Identify any eccentricity and its rotational position
   16. Adjust regions wheelfeed programme for eccentricity
   17. Identify positions of other regions to be ground
   18. Compute adjusted wheelfeed programme for each other region
   19. Rotate workpiece to grind
   20. Advance wheel to engage workpiece region
   21. Enter target wheel advance for region
   22. Grind using adjusted wheelfeed programme for region
   23. Measure wheel advance
   24. Stop wheelfeed at required wheel advance
   25. Retract wheel
   26. More regions to be ground? - Yes or No
   27. If Yes, go to 28. If No, go to 30
   28. Select next region
   29. Go to 19
   30. Stop workpiece rotation
   31. Demount workpiece
   32. More workpieces? - Yes or No
   33. If Yes, go to 34. If No, go to 36
   34. Mount next workpiece
   35. Go to 19
   36. END
4. Alternative set-up routine for a computer controlled grinding machine for grinding a workpiece having two or more regions to be concentrically ground, and subsequent grinding of similar workpieces
   1. Load workpiece data into machine computer
   2. Load wheelfeed programme for workpiece regions
   3. Enter target wheel advances for the regions
   4. Mount workpiece
   5. Select region to grind
   6. Rotate workpiece about primary axis for grinding
   7. Align grinding wheel with region to be ground
   8. Initiate programme to deliver wheelfeed control signals
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify any eccentricity and its rotational position
   17. Adjust region's wheelfeed programme for eccentricity
   18. More regions to be ground? - Yes or No
   19. If Yes, go to 5; If No, go to 20
   20. Select region to regrind
   21. Rotate workpiece about primary axis for grinding
   22. Enter target wheel advance for region
   23. Align grinding wheel with region to be ground
   24. Initiate adjusted wheelfeed programme for region
   25. Advance wheel to engage region
   26. Grind region and measure wheel advance
   27. Stop wheelfeed at desired wheel advance and retract
   28. More regions to regrind? Yes or No
   29. If Yes, go to 20; If No, go to 30
   30. Stop workpiece rotation
   31. Demount workpiece
   32. More workpieces? - Yes or No
   33. If Yes, go to 34. If No, go to 36
   34. Mount next workpiece
   35. Go to 20
   36. END
5. Set-up routine for a computer controlled grinding machine for grinding of workpieces having two or more regions which are to be concentrically ground, in which the machine parameters are set up by repeatedly grinding a first workpiece or a series of workpieces until the gauged results from each grinding are within pre-set limits and for subsequent grinding of similar workpieces using the machine as set up
   1. Load workpiece data in machine computer
   2. Load wheelfeed programme for workpiece regions
   3. Enter target wheel advances for the regions
   4. Mount workpiece
   5. Select region to grind
   6. Rotate workpiece about primary axis for grinding
   7. Align grinding wheel with region to be ground
   8. Initiate programme to delivery wheelfeed for the region
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify and store eccentricity magnitude and position
   17. Adjust region's wheelfeed programme for eccentricity
   18. More regions to be ground? Yes or No
   19. If Yes, go to 4; if No, go to 20
   20. Advance wheel to engage workpiece region
   21. Grind workpiece using adjusted wheelfeed for engaged region
   22. Measure wheel advance
   23. Stop wheelfeed when required advance achieved
   24. Disengage wheel
   25. Rotate workpiece slowly
   26. Gauge diameter and store region's diameter value
   27. Identify any eccentricity and its rotational position
   28. Store magnitude and position of region's eccentricity
   29. Compare with previously stored values for region
   30. Compute differences between two sets of values
   31. Compare size of differences with predetermined limits
   32. Store comparison results for region
   33. More regions to be ground? Yes or No
   34. If Yes, go to 35; if No, go to 37
   35. Align wheel with region to be ground
   36. Go to 20
   37. Read stored comparison results
   38. If all results favourable, go to 39; if not, go to 20
   39. Preserve final adjusted wheelfeed programme values
   40. Demount workpiece
   41. End of Set-up. Begin grinding? Yes or No
   42. If Yes, go to 43; if No, go to 53
   43. Mount workpiece
   44. Align wheel with region to be ground
   45 Advance and grind using final adjusted wheelfeed programme values
   46. Measure wheel advance
   47. Stop wheelfeed at desired advance
   48. Retract wheel
   49. Stop workpiece rotation
   50. Demount workpiece
   51. More workpieces? Yes or No
   52. If Yes, go to 43; if No, go to 53
   53. Enter STANDBY MODE
6. Set-up routine for a computer controlled grinding machine for grinding workpieces having two or more regions to be concentrically ground in which the wheelfeed and other parameters required for grinding are computed as the mean of a purality of values derived by a sequence of measurements on a plurality of test workpieces, and subsequent grinding of similar workpieces using the machine as set up
   1. Load workpiece data in machine computer
   2. Load wheelfeed programme for workpiece regions
   3. Enter target wheel advances for the regions
   4. Mount workpiece and reset counter to zero
   5. Select region to grind
   6. Rotate workpiece about primary axis for grinding
   7. Align grinding wheel with region to be ground
   8. Initiate programme to delivery wheelfeed for the region
   9. Advance wheel to engage region
   10. Grind workpiece and measure wheel advance
   11. Stop wheelfeed at desired wheel advance
   12. Disengage wheel and workpiece
   13. Engage diameter measuring gauge on ground region
   14. Rotate workpiece slowly
   15. Gauge ground diameter and store diameter measurements
   16. Identify and store eccentricity magnitude and position
   17. More regions to be ground? Yes or No
   18. If Yes, go to 5; if No, go to 19
   19. Increment workpiece counter by one
   20. Demount workpiece
   21. More workpieces to be checked? Yes or No
   22. If Yes, go to 4; if No, go to 23
   23. Compute arithmetic mean of adjusted wheelfeed control signals for each region using counter value
   24. Store mean wheelfeed signals for each region in place of originally loaded wheelfeed programme
   25. Store final wheel advances for the regions in place of data entered in step 3
   26. End of set up. Begin grinding? Yes or No
   27. If Yes, go to 28; if No, go to 43
   28. Mount workpiece
   29. Select region to grind
   30. Rotate workpiece about primary axis for grinding
   31. Align grinding wheel with region to be ground
   32. Advance wheel to engage region
   33. Control wheelfeed using mean wheelfeed signals for region
   34. Grind workpiece and measure wheel advance
   35. Stop wheelfeed at desired wheel advance
   36. Disengage wheel and workpiece
   37. More regions to grind? Yes or No
   38. If Yes, go to 29; if No, go to 39
   39. Demount workpiece
   40. More workpieces? Yes or No
   41. If Yes, go to 28; if No go to 42
   42. END
   43. Enter STANDBY MODE

## Claims

1. A method of setting up a computer controlled grinding machine having a grinding wheel (12) for concentrically grinding an external cylindrical region (31) of a workpiece, comprising the steps of loading a programme containing data about the workpiece, loading a programme containing wheelfeed instructions, running the wheelfeed programme instructions so as to grind the workpiece region, disengaging the grinding wheel (12), measuring (34) any unwanted eccentricity introduced into the region by the grinding process together with the angular position thereof, and adjusting the wheelfeed programme instructions or control signals to form corrected wheelfeed programme instructions or control signals, so that during subsequent grinding of the said region, or of similar regions of similar workpieces, the wheelfeed is controlled to produce a complementary eccentricity so as to compensate for the measured unwanted eccentricity.

2. A method as claimed in claim 1 wherein the step of measuring of the workpiece region (31) occurs after the workpiece has been stress relieved.

3. A method as claimed in claim 1 or claim 2 as applied to an elongate workpiece containing a plurality of such regions (31) to be ground at spaced apart positions axially therealong and which is supported at opposite ends (24, 26), wherein the setting up process measurements are performed on a concentric cylindrical region approximately midway along the axial length of the workpiece, and proportionately reduced corrections are applied to the wheelfeed programme instructions or control signals to be used for similar regions (31) to be ground and which are displaced from the mid position towards one or the other of the supported ends of the workpiece.

4. A method as claimed in claim 1 or claim 2 as applied to an elongate workpiece supported at opposite ends (24, 26) in which unwanted eccentricity introduced by the grinding process forces can vary in extent along the axial length thereof, as measured with reference to its supported ends, such that regions (31) towards the centre of the workpiece require a greater degree of eccentricity compensation during grinding as opposed to those adjacent the ends thereof, the method comprising the further steps of cylindrically grinding all of the cylindrical surfaces of a workpiece which are to be concentric with the primary workpiece axis without introducing any compensation for unwanted eccentricity introduced by the grinding process forces, thereafter making measurements on the workpiece to determine any unwanted eccentricity and the angular position thereof about the primary workpiece axis of rotation for each of the ground regions, and separately adjusting each of the wheelfeed programme instructions or control signals to form corrected wheelfeed programme instructions or control signals to be used to control the wheelfeed during the subsequent grinding of the or another similar such workpiece, at each of the corresponding said regions thereof, so as to compensate individually for any process-induced eccentricity in each said region.

5. A method as claimed in any one of claims 1 to 4 wherein after a setting up process has been performed and the original workpiece has been reground using the corrected wheelfeed programme instructions or control signals, a further gauging (34) of the reground workpiece is performed, and second order corrections are made to the wheelfeed programme instructions or control signals, before grinding further workpieces.

6. A method as claimed in any one of claims 1 to 5 wherein after the wheelfeed programme instructions or control signals have been adjusted, the wheelfeed drive (22) is thereafter controlled by means of said corrected wheelfeed programme instructions or control signals, to grind workpieces similar to that used during the setting up.

7. A method as claimed in any one of claims 1 to 5 in which instead of producing only one workpiece (31) on which measurements are made during the setting up, at each stage a plurality of workpieces are ground which together form a sample, and eccentricity measurements are made on all the workpieces in each sample, thereby to determine the extent of any unwanted eccentricity both in terms of angular position and radial extent for each region of each workpiece in each sample, and the mean unwanted eccentricity and mean angular position of such eccentricity is determined for each sample, for use as the basis for said corrected wheelfeed programme instructions or control signals.

8. A method of grinding concentric cylindrical regions (31) of similar workpieces, comprising the steps of setting up a computer controlled grinding machine by a method as claimed in any one of claims 1 to 7, and thereafter grinding cylindrical regions (31) of workpieces similar to that used in the setting up process by using said corrected wheelfeed programme instructions or control signals derived from the setting up procedure to control the wheelfeed drive (22) during each grinding.

9. A method as claimed in any one of claims 1 to 8 in which there is utilised, at a smaller scale, a software controlled crankpin following facility incorporated into a computer controlled grinding machine, which permits a grinding wheel to follow the relatively large eccentric movement of a crankpin during grinding as the crankshaft rotates, to compensate for said unwanted eccentricity introduced into the cylindrically ground surfaces of the crankshaft as a consequence of grinding process forces exerted as such surfaces are ground, and which tends to appear after the workpiece is stress relieved.

10. A method as claimed in claim 8 in which the wheelfeed drive (22) includes two modes, a first mode for normal advance and withdrawal, and a second mode in which very small but very precise adjustments are made to the instantaneous grinding wheel position so that during grinding, with the wheel (12) in contact with the workpiece and surface grinding being performed, the wheel can be urged backwards and forwards by very small amounts in synchronism and appropriate phase with the rotation of the workpiece, using said corrected wheelfeed programme instructions or control signals, to compensate for any eccentricity which would otherwise arise in the grinding of the workpiece region due to forces produced during the grinding process.

11. A computer controlled grinding machine for performing methods of grinding as claimed in any one of claims 1 to 10 comprising a grinding wheel (12), drive means (14) for rotating the wheel, wheelfeed drive means (22) for advancing and withdrawing the wheel (12) towards and away from an external cylindrical region (31) of a workpiece in a precise manner, computer means (32) for controlling the wheelfeed drive means, which computer means (32) includes first memory means for storing programmable wheelfeed instructions whereby the position of the wheel (12) at each instant during a grinding process can be controlled, programme means loaded into the computer means (32) to control the advance and withdrawal and position of the wheel, gauge means (34) connected to the computer means for measuring said unwanted eccentricity and the angular position thereof while the wheel is disengaged, and second memory means for storing correction signals derived from the gauge means for adjusting the original wheelfeed instructions during the grinding of said regions (31), or storing said corrected wheelfeed programme instructions or control signals, so that a complementary eccentricity is produced in said region (31).

12. A machine as claimed in claim 11 when programmed to operate a grinding process which will reduce unwanted eccentricity introduced by grinding process forces into what should be a concentric cylindrical workpiece region (31), by grinding each such region so as to be complementarily eccentric to any eccentricity which would be introduced by grinding process forces.

## Patentansprüche

1. Verfahren zum Einrichten einer rechnergesteuerten Schleifmaschine, mit einer Schleifscheibe (12) zum konzentrischen Schleifen eines externen zylindrischen Bereiches (31) eines Werkstückes, **dadurch gekennzeichnet, dass** ein Daten über das Werkstück enthaltendes Programm und ein Instruktionen über den Scheibenvorschub enthaltendes Programm geladen wird, die Instruktionen des Scheibenvorschubprogramms so abgearbeitet werden, dass der Werkstückbereich geschliffen wird, die Schleifscheibe (12) außer Eingriff gebracht wird, jede unerwünschte Exzentrizität, die durch den Schleifvorgang zusammen mit deren Winkelposition in den Bereich eingeführt wird, gemessen wird (34), und die Schleifscheibenvorschubprogramm-Instruktionen oder Steuersignale so eingestellt werden, dass korrigierte Schleifscheibenvorschubprogramm-Instruktionen oder Steuersignale gebildet werden, derart, dass während des nachfolgenden Schleifvorganges dieses Bereiches oder ähnlicher Bereiche ähnlicher Werkstücke der Schleifscheibenvorschub so gesteuert wird, dass eine komplementäre Exzentrizität erzeugt wird, damit die gemessene unerwünschte Exzentrizität kompensiert wird.

2. Verfahren nach Anspruch 1, **dadurch gekennzeichnet, dass** das Messen des Werkstückbereiches (31) vorgenommen wird, nachdem das Werkstück entlastet worden ist.

3. Verfahren nach Anspruch 1 oder 2 für ein längliches Werkstück, das eine Vielzahl solcher Bereiche (31) enthält, die an in axialer Richtung voneinander beabstandeten Positionen geschliffen werden sollen, und das an entgegengesetzten Enden (24, 26) abgestützt ist, **dadurch gekennzeichnet, dass** die Messungen, die den Einrichtprozess betreffen, an einem konzentrischen zylindrischen Bereich etwa in der Mitte der axialen Länge des Werkstückes vorgenommen werden, und proportional reduzierte Korrekturen den Schleifscheibenvorschubprogramm-Instruktionen oder Steuersignalen aufgegeben werden, die für ähnliche zu schleifende Bereiche (31) verwendet werden, und die aus der Mittenposition gegen das eine oder das andere der abgestützten Enden des Werkstückes verschoben werden.

4. Verfahren nach Anspruch 1 oder 2 für ein längliches Werkstück, das an entgegengesetzten Enden (24, 26) abgestützt wird, bei dem eine unerwünschte Exzentrizität, die durch die beim Schleifvorgang auftretenden Kräfte entsteht, im Ausmaß längs der axialen Länge, gemessen in bezug auf die abgestützten Enden, variieren kann, derart, dass Bereiche (31) zur Mitte des Werkstückes hin ein größeres Maß an Kompensation der Exzentrizität während des Schleifens im Vergleich zu den den Enden benachbarten Bereichen erforderlich macht, **dadurch gekennzeichnet, dass** ferner alle zylindrischen Oberflächen eines Werkstückes, die mit der primären Werkstückachse konzentrisch verlaufen sollen, zylindrisch geschliffen werden, ohne dass eine Kompensation einer unerwünschten, durch die beim Schleifvorgang auftretenden Kräfte eingeführten Exzentrizität durchgeführt wird, dass anschließend Messungen an dem Werkstück vorgenommen werden, um jede unerwünschte Exzentrizität sowie deren Winkelposition um die primäre Werkstückachse der Rotation für jeden der geschliffenen Bereiche festzustellen, und dass alle Schleifscheibenvorschubprogramm-Instruktionen oder Steuersignale getrennt eingestellt werden, um korrigierte Schleifscheibenvorschubprogramm-Instruktionen oder Steuersignale zu bilden, die zur Steuerung des Schleifscheibenvorschubs während des nachfolgenden Schleifens des oder eines anderen ähnlichen Werkstückes an jedem der entsprechenden Bereiche verwendet werden, so dass individuell jede der durch den Bearbeitungsvorgang entstandenen Exzentrizitäten in jedem Bereich kompensiert wird.

5. Verfahren nach einem der Ansprüche 1 - 4, **dadurch gekennzeichnet, dass** nach dem Durchführen des Einrichtvorganges und nachdem das ursprüngliche Werkstück unter Verwendung der korrigierten Schleifscheibenvorschubprogramm-Instruktionen oder Steuersignale nachgeschliffen worden ist, ein weiterer Messvorgang (34) des nachgeschliffenen Werkstückes vorgenommen wird, und dass Korrekturen zweiter Ordnung an den Schleifscheibenvorschubprogramm-Instruktionen oder Steuersignalen vorgenommen werden, bevor weitere Werkstücke geschliffen werden.

6. Verfahren nach einem der Ansprüche 1 - 5, **dadurch gekennzeichnet, dass** nach dem Einstellen der Schleifscheibenvorschubprogramm-Instruktionen oder Steuersignale der Schleifscheibenvorschub-Antrieb (22) anschließend mit Hilfe der korrigierten Schleifscheibenvorschubprogramm-Instruktionen oder Steuersignale so gesteuert wird, dass Werkstücke ähnlich dem während des Einrichtens benutzten geschliffen werden.

7. Verfahren nach einem der Ansprüche 1 - 5, **dadurch gekennzeichnet, dass** anstelle des Herstellens nur eines Werkstückes (31), an dem Messungen während des Einrichtens vorgenommen werden, in jeder Stufe eine Mehrzahl von Werkstücken geschliffen werden, die miteinander ein Muster bilden, und Exzentrizitätsmessungen an allen Werkstücken in jedem Muster vorgenommen werden, wodurch das Ausmaß unerwünschter Exzentrizität sowohl in bezug auf die Winkelposition als auch die radiale Erstreckung für jeden Bereich eines jeden Werkstückes in jedem Muster festgestellt wird, und die mittlere unerwünschte Exzentrizität sowie die mittlere Winkelposition einer solchen Exzentrizität für jedes Muster zur Verwendung als Basis für die korrigierten Schleifscheibenvorschubprogramm-lnstruktionen oder Steuersignale bestimmt wird.

8. Verfahren zum Schleifen von konzentrischen zylindrischen Bereichen (31) ähnlicher Werkstücke, **dadurch gekennzeichnet, dass** eine rechnergesteuerte Schleifmaschine nach einem Verfahren entsprechend einem der Ansprüche 1 - 7 eingerichtet wird, und dass anschließend zylindrische Bereiche (31) von Werkstücken ähnlich denen, die bei dem Einrichtvorgang verwendet werden, geschliffen werden, indem die korrigierten Schleifscheibenvorschubprogramm-Instruktionen oder Steuersignale verwendet werden, die aus dem Einricht-Vorgang abgeleitet werden, um den Schleifscheibenvorschub-Antrieb (22) während eines jeden Schleifvorganges. zu steuern.

9. Verfahren nach einem der Ansprüche 1 - 8, **dadurch gekennzeichnet, dass** in verkleinertem Maßstab ein durch Software gesteuerter Kurbelzapfen entsprechend einer Ausrüstung, die in eine rechnergesteuerte Schleifmaschine eingebaut ist, verwendet wird, wodurch ermöglicht wird, dass eine Schleifscheibe der relativ großen exzentrischen Bewegung eines Kurbelzapfens während des Schleifens bei rotierender Kurbelwelle folgt, um die unerwünschte Exzentrizität zu kompensieren, die in die zylindrisch geschliffenen Oberflächen der Kurbelwelle als Folge von auf dem Schleifvorgang beruhenden Kräften eingeführt wird, die beim Schleifen solcher Flächen ausgeübt werden, und die auftreten, nachdem das Werkstück entlastet worden ist.

10. Verfahren nach Anspruch 8, bei dem der Schleifscheibenvorschub-Antrieb (22) zwei Betriebsarten umfasst, nämlich eine erste Betriebsart für normalen Vorschub und Zurückziehen, und eine zweite Betriebsart, in der sehr kleine, jedoch präzise Einstellungen auf die augenblickliche Schleifscheibenposition durchgeführt werden, so dass während des Schleifens und während die Scheibe (12) in Kontakt mit dem Werkstück steht und ein Oberflächenschleifen durchgeführt wird, die Scheibe um sehr kleine Beträge synchron und in entsprechender Phase mit der Drehung des Werkstückes nach rückwärts und vorwäts bewegt werden kann, indem die korrigierten Schleifscheibenvorschubprogramm-lnstruktionen oder Steuersignale verwendet werden, um jede Exzentrizität zu kompensieren, die sonst bei dem Schleifvorgang des Werkstückbereiches aufgrund von Kräften, die während des Schleifvorganges entstehen, auftreten würden.

11. Rechnergesteuerte Schleifmaschine zur Durchführung des Verfahrens zum Schleifen nach einem der Ansprüche 1 - 10, **gekennzeichnet durch** eine Schleifscheibe (12), eine Antriebsvorrichtung (14) zum Rotieren der Schleifscheibe, eine Schleifscheibenvorschub- Antriebsvorrichtung (22) zum präzisen Vorschieben und Zurückziehen der Schleifscheibe (12) auf einen externen zylindrischen Bereich (31) eines Werkstückes zu und von ihm weg, einen Rechner (32) zur Steuerung der Schleifscheibenvorschub-Antriebsvorrichtung, die eine erste Speichervorrichtung zur Speicherung programmierbarer Schleifscheibenvorschub-Instruktionen aufweist, **durch** die die Position der Schleifscheibe (12) in jedem Augenblick während eines Schleifvorganges gesteuert werden kann, ein Programm, das in den Rechner (32) geladen wird, um den Vorschub und das Zurückziehen sowie das Positionieren der Schleifscheibe zu steuem, eine Messvorrichtung (34), die mit dem Rechner verbunden ist, um die unerwünschte Exzentrizität und deren Winkelposition zu messen, während die Schleifscheibe außer Eingriff steht, und eine zweite Speichervorrichtung zur Speicherung von Korrektursignalen, die aus der Messvorrichtung zur Einstellung der ursprünglichen Schleifscheibenvorschub-Instruktionen während des Schleifens der Bereiche (31) abgeleitet werden, oder zur Speicherung der korrigierten Schleifscheibenvorschubprogramm-lnstruktionen oder Steuersignale, so dass eine komplementäre Exzentrizität in diesem Bereich (31) erzeugt wird.

12. Maschine nach Anspruch 11, die programmiert einen Schleifvorgang durchführt, der unerwünschte Exzentrizitäten reduziert, die durch die während des Schleifvorganges auftretenden Kräfte in einen konzentrischen zylindrischen WerkstückBereich (31) eingeführt werden, indem jeder dieser Bereiche so geschliffen wird, als ob er komplementär exzentrisch zu einer Exzentrizität ist, die durch die beim Schleifvorgang auftretenden Kräfte eingeführt wird.

## Revendications

1. Procédé d'initialisation d'une machine de meulage commandée par ordinateur, comportant une meule (12) destinée à meuler de manière concentrique une région cylindrique extérieure (31) d'une pièce d'oeuvre, comprenant les étapes dans lesquelles on charge un programme contenant des données concernant la pièce d'oeuvre, on charge un programme contenant des instructions de progression de meule, on exécute les instructions de programme de progression de meule de façon à meuler la région de pièce d'oeuvre, on dégage la meule (12), on mesure (34) une quelconque excentricité non souhaitée introduite dans la région par le traitement de meulage conjointement avec sa position angulaire, et l'on ajuste les instructions, ou signaux de commande, de programme de progression de meule pour former des instructions, ou signaux de commande, de programme de progression de meule corrigés, de sorte que, lors d'un meulage ultérieur de ladite région, ou de régions similaires de pièces d'oeuvre similaires, on commande la progression de meule pour produire une excentricité complémentaire de façon à compenser l'excentricité non souhaitée mesurée.

2. Procédé selon la revendication 1, dans lequel l'étape de mesure de la région de pièce d'oeuvre (31) se fait dès la libération de la contrainte appliquée à la pièce d'oeuvre.

3. Procédé selon la revendication 1 ou la revendication 2, lorsqu'il s'applique à une pièce d'oeuvre allongée contenant une pluralité de ces régions (31) à meuler à des positions espacées axialement le long de celle-ci et qui est supportée au niveau d'extrémités opposées (24, 26), dans lequel les mesures de traitement d'initialisation sont effectuées sur une région cylindrique concentrique située approximativement à mi-chemin le long de la longueur axiale de la pièce d'oeuvre, et dans lequel on applique des corrections proportionnellement réduites aux instructions, ou signaux de commande, de programme de progression de meule à utiliser pour des régions similaires (31) à meuler et qui sont décalées de la position intermédiaire en direction de l'une ou de l'autre des extrémités supportées de la pièce d'oeuvre.

4. Procédé selon la revendication 1 ou la revendication 2, lorsqu'il s'applique à une pièce d'oeuvre allongée supportée au niveau d'extrémités opposées (24, 26), dans lequel on peut faire varier l'excentricité non souhaitée introduite par les forces de traitement de meulage, du point de vue de l'étendue sur sa longueur axiale, lorsqu'on la mesure en se référant à ses extrémités supportées, de façon que des régions (31) situées vers le centre de la pièce d'oeuvre nécessitent un degré supérieur de compensation d'excentricité pendant le meulage, contrairement à celles qui sont adjacentes à ses extrémités, le procédé comprenant les étapes supplémentaires dans lesquelles on meule cylindriquement toutes les surfaces cylindriques d'une pièce d'oeuvre qui doivent être concentriques à l'axe primaire de pièce d'oeuvre sans introduire de quelconque compensation d'excentricité non souhaitée introduite par les forces de traitement de meulage, on prend après cela des mesures de la pièce d'oeuvre pour déterminer une quelconque excentricité non souhaitée et sa position angulaire autour de l'axe primaire de rotation de pièce d'oeuvre pour chacune des régions meulée, et l'on ajuste individuellement chacune des instructions, ou signaux de commande, de programme de progression de meule pour former des instructions, ou signaux de commande, de programme de progression de meule corrigés à utiliser pour commander la progression de meule pendant le meulage ultérieur de la, ou d'une autre, pièce d'oeuvre similaire de ce type, au niveau de chacune de sesdites régions correspondantes, de façon à compenser individuellement toute excentricité introduite par traitement dans chaque dite région.

5. Procédé selon l'une quelconque des revendications 1 à 4, dans lequel, dès que l'on a effectué le traitement d'initialisation et que l'on a de nouveau meulé la pièce d'oeuvre d'origine en utilisant les instructions, ou signaux de commande, de programme de progression de meule corrigés, on effectue un échantillonnage supplémentaire (34) de la pièce d'oeuvre de nouveau meulée, et l'on apporte des corrections de second ordre aux instructions, ou signaux de commande, de programme de progression de meule, avant de meuler d'autres pièces d'oeuvre.

6. Procédé selon l'une quelconque des revendications 1 à 5, dans lequel dès que l'on a ajusté les instructions, ou signaux de commande, de programme de progression de meule, le système d'entraînement de progression de meule (22) est commandé après cela au moyen desdites instructions, ou signaux de commande, de programme de progression de meule corrigés, pour meuler des pièces d'oeuvre similaires à celle utilisée pendant l'initialisation.

7. Procédé selon l'une quelconque des revendications 1 à 5, dans lequel, plutôt que de produire seulement une pièce d'oeuvre (31) sur laquelle on effectue des mesures pendant l'initialisation, on meule une pluralité de pièces d'oeuvre à chaque étage, qui forment conjointement un échantillon, et l'on effectue des mesures d'excentricité de toutes les pièces d'oeuvre de chaque échantillon, pour déterminer ainsi l'ampleur d'une quelconque excentricité non souhaitée à la fois en termes de position angulaire et d'étendue radiale pour chaque région de chaque pièce d'oeuvre de chaque échantillon, et dans lequel on détermine l'excentricité non souhaitée moyenne et la position angulaire moyenne de cette excentricité pour chaque échantillon, pour utilisation en tant que base concernant lesdites instructions, ou signaux de commande, de programme de progression de meule corrigés.

8. Procédé de meulage de régions cylindriques concentriques (31) de pièces d'oeuvre similaires, comprenant les étapes dans lesquelles on initialise une machine de meulage commandée par ordinateur à l'aide d'un procédé selon l'une quelconque des revendications 1 à 7, et l'on meule, après cela, des régions cylindriques (31) de pièces d'oeuvre similaires à celle utilisée lors du traitement d'initialisation en utilisant lesdites instructions, ou signaux de commande, de programme de progression de meule corrigés obtenus à partir de la procédure d'initialisation pour commander le système d'entraînement de progression de meule (22) pendant chaque meulage.

9. Procédé selon l'une quelconque des revendications 1 à 8, dans lequel on utilise, à une échelle plus petite, une exactitude de suivi de tourillon commandée par logiciel incorporé dans une machine de meulage commandée par ordinateur, qui permet à une meule de suivre le déplacement excentrique relativement important d'un tourillon pendant le meulage lorsque le vilebrequin tourne, pour compenser ladite excentricité non souhaitée introduite dans les surfaces meulées cylindriquement du vilebrequin, conséquentes à des forces de traitement de meulage exercées lors du meulage de ces surfaces, et qui tendent à apparaître dès qu'on libère la pièce d'oeuvre de la contrainte appliquée.

10. Procédé selon la revendication 8, dans lequel le système d'entraînement de progression de meule (22) inclut deux modes, un premier mode d'avance et de retrait normaux, et un second mode dans lequel on apporte de très petits, mais très précis, ajustements à la position instantanée de meule, de sorte que, pendant le meulage, la meule (12) étant en contact avec la pièce d'oeuvre et un meulage de surface étant effectué, la meule peut être poussée vers l'arrière et vers l'avant, de très petites quantités, en synchronisme et en phase appropriée avec la rotation de la pièce d'oeuvre, en utilisant lesdites instructions, ou signaux de commande, de programme de progression de meule corrigés, pour compenser toute excentricité qui apparaîtrait autrement lors du meulage de la région de pièce d'oeuvre en raison de forces produites pendant le traitement de meulage.

11. Machine de meulage commandée par ordinateur destinée à effectuer des procédés de meulage selon l'une quelconque des revendications 1 à 10, comprenant une meule (12), un moyen d'entraînement (14) destiné à entraîner en rotation la meule, un moyen de commande de progression de meule (22) destiné à avancer et à retirer la meule (12) en l'approchant et en l'écartant, de façon précise, d'une région cylindrique extérieure (31) d'une pièce d'oeuvre, un moyen formant ordinateur (32) destiné à commander le moyen d'entraînement de progression de meule, lequel moyen formant ordinateur (32) comprend un premier moyen de mémorisation destiné à mémoriser des instructions de progression de meule pouvant être programmées, ce par quoi l'on peut commander à chaque instant la position de la meule (12) pendant un traitement de meulage, un moyen formant programme chargé dans le moyen formant ordinateur (32) pour commander l'avance et le retrait et le positionnement de la meule, un moyen d'échantillonnage (34) connecté avec le moyen formant ordinateur, destiné à mesurer ladite excentricité non souhaitée et sa position angulaire pendant la meule est dégagée, et un second moyen de mémorisation destiné à mémoriser des signaux de correction obtenus à partir du moyen d'échantillonnage, destiné à ajuster les instructions de progression de meule d'origine pendant le meulage desdites régions (31), ou à mémoriser lesdites instructions, ou signaux de commande, de programme de progression de meule corrigés, de façon à produire une excentricité complémentaire dans ladite région (31).

12. Machine selon la revendication 11, lorsqu'on la programme pour exploiter un traitement de meulage qui réduit une excentricité non souhaitée introduite par des forces de traitement de meulage dans ce qui doit être une région de pièce d'oeuvre cylindrique concentrique (31), en meulant chacune de ces régions de façon qu'elle soit complémentairement excentrique à toute excentricité qui serait introduite par des forces de traitement de meulage.
